# EUROPÄISCHE PATENTSCHRIFT

(11) **EP 1 141 935 B1**
(45) Veröffentlichungstag und Bekanntmachung des Hinweises auf die Patenterteilung: **03.10.2007**
(21) Anmeldenummer: 99967892.3
(22) Anmeldetag: 21.12.1999
(51) Int. Cl.: G09G 5/00, B60K 35/00

(54) **ANZEIGEVORRICHTUNG UND VERFAHREN ZUR ANZEIGE**
DISPLAY DEVICE AND DISPLAY METHOD
DISPOSITIF ET PROCEDE D'AFFICHAGE

(30) Priorität: 22.12.1998 DE 19859430
(43) Veröffentlichungstag der Anmeldung: 10.10.2001
(73) Patentinhaber: ROBERT BOSCH GMBH, 70442 Stuttgart (DE)
(72) Erfinder: MEROTH, Ansgar, D-72766 Reutlingen (DE); GEISLER, Thomas, D-76137 Karlsruhe (DE)
(86) Internationale Anmeldenummer: PCT/DE1999/004074
(87) Internationale Veröffentlichungsnummer: WO 2000/038169

(56) Entgegenhaltungen:
- EP-A- 0 537 564
- DE-A- 4 140 864
- DE-A- 4 314 286
- ONG R: "DESIGN A MINIMUM-SPACE AUTO-INSTRUMENT MODULE" ELECTRONIC DESIGN,US,PENTON PUBLISHING, CLEVELAND, OH, Bd. 37, Nr. 18, 24. August 1989 (1989-08-24), Seiten 53-56,58,60, XP000053039 ISSN: 0013-4872

## Beschreibung

### Stand der Technik

Die Erfindung geht aus von einer Anzeigevorrichtung nach der Gattung des Hauptanspruchs. Es sind allgemein schon Anzeigevorrichtungen bekannt, bei denen eine Anzeige von einer Steuervorrichtung Datensignale erhält, die in der Steuervorrichtung und/oder in einer Rechnereinheit, die mit der Steuervorrichtung verbunden ist, berechnet und für die Anzeige aufbereitet wurden. Die Steuervorrichtung ist im allgemeinen mit einem Bildspeicher verbunden, in den sowohl die Steuervorrichtung selbst, als auch die Rechnereinheit Daten einschreibt. Die Daten werden anschließend periodisch ausgelesen und zur Anzeige geleitet, wobei eine Einschaltung der Rechnereinheit nicht mehr erforderlich ist. Der Bildspeicher ist ein flüchtiger Zwischenspeicher, in dem die für das Bild erforderlichen und von der Rechnereinheit bzw. der Steuervorrichtung berechneten Daten nach und nach gesammelt und schließlich vollständig an die Anzeige weitergeleitet werden können. Z.B. können die einzelnen Bildzeilen nacheinander weitergeleitet werden. Die für die Bearbeitung benötigte Zeit ist dabei insbesondere durch die für die Berechnung der in der Anzeige darzustellenden Bilder und durch die für die Übertragung zwischen der Rechnereinheit, der Steuervorrichtung und dem Bildspeicher benötigte Zeit vorgegeben. Um diese Übertragungszeit zu vermindern gibt es Vorschläge, den Bildspeicher mit einer Steuervorrichtung in einem Halbleiterbaustein zu integrieren. Der Aufwand zur Berechnung der Daten bzw. die benötigte Bandbreite für eine Datenverbindung zwischen einer Recheneinheit und der Steuervorrichtung werden durch dieses Vorgehen jedoch nicht verändert.

Aus der DE 41 40 864 A1 ist eine Vorrichtung zur multifunktionellen Diagnoseanzeige für das Armaturenbrett von Kraftfahrzeugen bekannt. Die Vorrichtung umfasst eine Anzeigeeinrichtung in der Form einer Punktmatrix, die normalerweise die Daten einer Zeitmesseinheit anzeigt. Ein elektronisches Modul nimmt über eine Schnittstelle eine Reihe von Informationen über Störungen auf und steuert die Anzeigeeinrichtung derart, dass eine entsprechende Störungsinfonnation anstelle der Zeitdaten sichtbar wird. Die Informationen sind in Registern eines Speichers gespeichert Das elektrische Modul steuert das Register so an, dass ein in einem angesteuerten Register gespeichertes grafisches Symbol entsprechend der jeweiligen Störung angezeigt wird. Der Inhalt der Register kann ausgewechselt werden.

Aus dem Artikel "Design a Minimum-Space Auto-Instrument Module", 2328 Electronic Design, 37 (1989) August 24, No. 18, Cleveland, US, ist ein Mikrocontroller bekannt, der einen Speicher für Symboldaten aufweist, die in einen Arbeitsspeicher des Mikrocontrollers übertragen werden. Der Arbeitsspeicher wird von einer Schaltvorrichtung zum Ansteuern einer LED-Punktmatrixanzeige so ausgelesen, dass die dort gespeicherten Bilddaten angezeigt werden.

### Vorteile der Erfindung

Die erfindungsgemäße Anzeigevorrichtung mit den Merkmalen des Hauptanspruchs hat demgegenüber den Vorteil, dass der Anzeigevorrichtung ein Speicher zugeordnet ist, in dem eine vorgebbare Anzahl von darzustellenden und bereits berechneten Bildern in Datenform abgelegt sind. Soll nun eines dieser Bilder angezeigt werden, so muss dieses Bild nicht neu berechnet werden, sondern kann direkt dem Inhalt des Bildspeichers überlagert werden. Hierdurch wird der Rechenaufwand für die Bilddarstellung vermindert und somit Rechenzeit eingespart, bzw. das Leistungsvermögen der Recheneinheit kann verringert werden. Dies ist insbesondere für Anwendungen von Vorteil, bei denen die gleichen Bilder häufig angezeigt werden. Der Bildspeicher kann nun auf herkömmliche Weise ausgelesen werden.

Durch die in den Unteransprüchen aufgeführten Maßnahmen sind vorteilhafte Weiterbildungen und Verbesserungen der im Hauptanspruch angegebenen Anzeigevorrichtung möglich. Besonders vorteilhaft ist es, den Speicher, in dem die darzustellenden Bilder in Datenform abgelegt sind, der Steuervorrichtung zuzuordnen. Hierdurch ist es möglich, Datenverbindungen zwischen Recheneinheit und Steuervorrichtung schmalbandig zu gestalten und z.B. als eine serielle Schnittstelle auszuführen. Denn es ist nun nicht mehr erforderlich, dass berechnete Bilddaten von der Recheneinheit zu der Steuervorrichtung übermittelt werden. Vielmehr müssen nur noch Anweisungen dafür übermittelt werden, ein bestimmtes, gespeichertes Bild auszugeben, d.h. zunächst an den Bildspeicher zu übermitteln. Hierfür müssen nur wenige Daten übertragen werden. Bei dieser schmalbandigen Verbindung kann die für die Verbindung notwendige Leitungszahl reduziert und die Belastung anderer Fahrzeugsysteme durch eine elektromagnetische Abstrahlung der Datenverbindung sowie eine mögliche Störung der Datenverbindung durch einfallende elektromagnetische Strahlung vermindert werden.

Weiterhin ist es vorteilhaft, den Speicher nicht flüchtig zu gestalten, da so die einmal berechneten Bilddaten auch nach einem Herunterfahren des Systems erhalten bleiben und bei Einschalten des Systems nicht erneut berechnet werden müssen, wodurch das System einem Benutzer nach dem Einschalten schneller zur Verfügung stehen kann.

Es ist weiterhin vorteilhaft, daß der nichtflüchtige Speicher als ein veränderbarer Speicher ausgebildet ist, in dem die abgelegten Bilder veränderbar sind. Somit ist es möglich, die Anzeige an eine andere Anwendung, an eine neuere Version der darzustellenden Bilder bzw. an die Wünsche eines Benutzers anzupassen, ohne daß die Anzeigevorrichtung oder der Speicher ersetzt werden müssen.

Ferner ist es vorteilhaft, wenn der Anzeigevorrichtung die veränderten Bilder über eine Schnittstelle zuführbar sind, da sie auf diese Weise nicht von der Anzeigevorrichtung selbst berechnet werden müssen und die Anzeigevorrichtung deshalb keine Mittel für einen solche Berechnungsvorgang aufweisen muß.

Weiterhin ist es vorteilhaft, daß eine vorgebbare Anzahl der in dem Speicher abgelegten Bilder Teilbilder sind, aus denen ein Gesamtbild oder Teile eines Gesamtbildes zusammensetzbar sind. Somit ist es möglich, innerhalb eines Gesamtbildes veränderbare Bildelemente darzustellen. Solche Bildelemente können z.B. ein Zeiger innerhalb eines darzustellenden Zeigerinstrumentes oder Hinweissymbole sein, die in ein größeres Gesamtbild eingeblendet werden. Weiterhin ist es vorteilhaft, daß durch die Möglichkeit, Bilder in Teilbildern abzulegen, die Größe eines Datenpaketes, das ein Teilbild enthält, gering bleibt. Dies erleichtert sowohl eine Datenspeicherung als auch einen Datentransport.

Weiterhin ist es vorteilhaft, daß die Teilbilder zu unterschiedlichen Gesamtbildern zusammensetzbar sind. Hierdurch ist es möglich, einzelne Teilbilder in verschiedenen Gesamtbildern zu verwenden. Somit kann Speicherplatz gespart werden, da ein Teilbereich in den mehreren Gesamtbildern verwendet, jedoch nur einmal gespeichert wird.

Es ist weiterhin vorteilhaft, daß die in dem Speicher abgelegten Teilbilder mit zusätzlichen Informationen gespeichert sind. Insbesondere ist die Breite und Höhe des Teilbildes zu nennen, durch deren Angabe eine Synthese von Teilbildern zu einem Gesamtbild erleichtert wird, da diese Daten nicht erst berechnet werden müssen. Weiterhin ist es möglich, als zusätzliche Information z.B. die Wichtigkeit der Anzeige eines Teilbildes zu speichern, da so bei mehreren Teilbildern, die in einem Bereich der Anzeige angezeigt werden, hierdurch festgelegt wird, welches der Teilbilder sichtbar ist. Wird z.B. einem Warnsymbol eine hohe Wichtigkeit zugewiesen, so wird hierdurch sichergestellt, daß das Warnsymbol einem Teilbild und/oder Gesamtbild überlagert wird, daß kein Überschreiben des Warnsymbols z.B. durch eine Zeigerbewegung eines dargestellten Meßinstrumentes erfolgt und einem Benutzer somit die Warnung direkt angezeigt wird. Dadurch daß also die Daten, die für die Synthese eines Gesamtbildes wichtig sind, bereits in dem Speicher abgelegt sind und nicht erst berechnet werden müssen, wird die Bilddarstellung erleichtert, indem der Rechenaufwand vermindert wird.

Es ist weiterhin vorteilhaft, die in dem Speicher abgelegten Bilddaten miteinander zu verketten. Insbesondere bei Animationssequenzen, also einer schnellen Anzeigeabfolge verschiedener Teilbilder und/oder Gesamtbilder, erspart es Rechenzeit, daß nicht erst ein Kopiervorgang der verschiedenen Teilbilder von dem Speicher in den Bildspeicher durch die Rechnereinheit ausgelöst werden muß, sondern daß ein Teilbild direkt einen Verweis auf das nächste anzuzeigende Teilbild enthält.

Es ist ferner vorteilhaft, daß zumindest ein Teil der Bilder komprimiert gespeichert ist und die Anzeigevorrichtung über einen Decoder für komprimiert vorliegende Bilddaten verfügt. Durch die Kompression der Bilddaten ist es möglich, in einem vorgegebenen Speicher die Anzahl der gespeicherten Bilder zu erhöhen und somit die Vielfalt der durch die Anzeigevorrichtung ohne erneute Berechnung darstellbaren Bilder zu erhöhen. Dabei tritt bei der Kompression der Bilddaten kein Qualitätsverlust der Bilddaten auf, da durch den Decoder für die komprimiert vorliegenden Bilddaten gegenüber der Anzeige der ursprüngliche Informationsgehalt der Bilddaten zur Verfügung steht.

Es ist weiterhin vorteilhaft, daß die Anzeigevorrichtung ein frei programmierbares Kombiinstrument ist, da insbesondere für diese Anwendung während einer Fahrt die anzuzeigenden Meßwerte und damit die darzustellenden Bilder z.B. für eine Geschwindigkeit eines Fahrzeugs, Motordrehzahl eines Fahrzeugs bzw. Uhrzeit immer wiederkehren und eine begrenzte Menge darzustellender Bilder umfassen. Somit ist eine Speicherung aller darzustellenden Bilder möglich. Ein Zugriff auf diese gespeicherten Bilder kann somit weitaus schneller erfolgen als eine jeweilige Neuberechnung. Gegenüber Anzeigevorrichtungen, die Steuervorrichtungen benötigen, wie sie möglicherweise in einem Personal Computer verwendet werden, kann der Aufwand für die Steuervorrichtung minimiert und an die Anwendung in einem Fahrzeug angepaßt werden. Indem auf gespeicherte, darzustellende Bilddaten zurückgegriffen wird, kann die für die Anzeigevorrichtung benötigte Rechenleistung stark reduziert werden, wodurch die Anzeigevorrichtung preislich günstiger gegenüber Anzeigevorrichtungen sein kann, die auf teure Bestandteile mit hoher Rechenleistung zurückgreifen, wie sie in einem Personal Computer verwendet werden, bei dem die Bildinformationen berechnet werden müssen.

Weiterhin ist es vorteilhaft, daß die Steuervorrichtung als ein Halbleiterelement, also vorzugsweise auf einem Chip integriert, ausgeführt ist, da auf diese Weise Montagekosten reduziert werden können. Denn es kann z.B. auf eine Platinenbestückung mit mehreren Bauelementen verzichtet werden.

Außerdem ist es vorteilhaft, daß die Steuervorrichtung eine serielle Schnittstelle umfaßt. Durch diese Integration kann einerseits Montageplatz gespart, andererseits auf einen zusätzlichen Montageschritt einer Schnittstelleneinheit verzichtet werden.

### Zeichnung

Ausführungsbeispiele der Erfindung sind in der Zeichnung dargestellt und in der nachfolgenden Beschreibung näher erläutert. Es zeigt Figur 1 eine erfindungsgemäße Ausführung der Anzeigevorrichtung, Figur 2 eine erfindungsgemäße Darstellung von Bilddaten in einer Anzeige, Figur 3 eine Darstellung von erfindungsgemäß gespeicherten Bilddaten von Teilbildern, Figur 4 eine weitere erfindungsgemäße Ausführung der Anzeigevorrichtung und Figur 5 eine weitere erfindungsgemäße Ausführung der Anzeigevorrichtung.

### Beschreibung des Ausführungsbeispiels

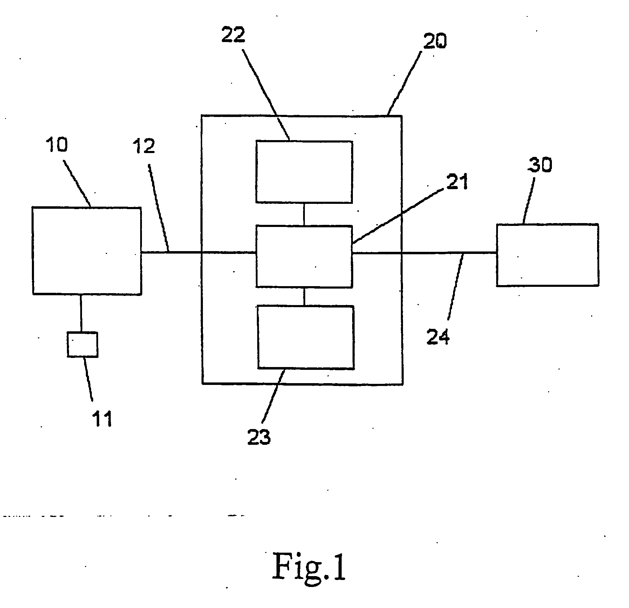

In Figur 1 ist eine erfindungsgemäße Anzeigevorrichtung dargestellt. Eine Recheneinheit 10 ist mit einem Dateneingang 11 verbunden. Über eine erste Datenverbindung 12 ist die Recheneinheit 10 mit einer Steuervorrichtung 20 verbunden. Die Steuervorrichtung 20 verfügt über einen Prozessor 21 sowie einen ersten Speicher 22 und einen zweiten Speicher 23. Über eine zweite Datenverbindung 24 ist die Steuervorrichtung 20 mit der Anzeige 30 verbunden.

Die Anzeigevorrichtung kann in einem Fahrzeug eingesetzt werden und die Anzeige 30 dabei als Kombiinstrument vor einem Fahrer, als Anzeige in der Mittelkonsole und/oder im Font des Fahrzeugs eingesetzt werden.

Über den Dateneingang 11 werden der Recheneinheit 10 Informationen zur Verfügung gestellt. Bei der Verwendung der Anzeigevorrichtung für ein Kombiinstrument betreffen diese Informationen den momentanen Zustand des Fahrzeugs oder seiner Umgebung wie z.B. die Fahrzeuggeschwindigkeit, die Motordrehzahl oder die Innen- und Außentemperatur. Weiterhin sind Informationen zur Navigation oder Daten eines Informationsdienstes wie z.B. Daten des DAB (Digital Audio Broadcasting) möglich. Bei einem Telekommunikationsendgerät betreffen die Informationen z.B. die Rufnummer eines Anrufers bzw. die aufgelaufenen Gesprächskosten für einen vorgebbaren Zeitraum. Bei einem Verkaufsautomaten betreffen die Informationen z.B. ein Produkt oder eine Dienstleistung, die ein Benutzer des Automaten wünscht. Bei einem Steuerterminal in einer Industrieanlage betreffen die Informationen die Prozeßparameter der Industrieanlage wie z.B. Durchsatz, Fehlerhäufigkeit oder Betriebstemperatur. Weitere, mit der Recheneinheit 10 verbundene Einheiten, die für eine Recheneinheit üblicherweise verwendet werden, wie z.B. ein Speicher oder ein Datenausgang sind nicht eingezeichnet. Die Recheneinheit 10 errechnet aus den über den Dateneingang 11 erhaltenen Informationen Anweisungen für die Steuervorrichtung 20, die über die erste Datenverbindung 12 an die Steuervorrichtung 20 weitergegeben werden. Dabei können Bilddaten auf herkömmliche Weise direkt von der Recheneinheit 10 in den zweiten Speicher 23 geschrieben werden.

Insbesondere ist es jedoch vorgesehen, über die erste Datenverbindung 12 Anweisungen an den Prozessor 21 weiterzugeben, aus dem ersten Speicher 22 bereits vorher berechnete Bilddaten von durch die Recheneinheit bestimmten Bildern von dem ersten Speicher 22 in den zweiten Speicher 23 zu kopieren und damit dem Inhalt des zweiten Speichers 23 zu überlagern. Der Prozessor 21 wählt gemäß den von der Rechnereinheit 10 übermittelten Anweisungen aus dem ersten Speicher 22 die Daten des bestimmten darzustellenden Bildes aus und steuert das Kopieren von Bilddaten von dem ersten Speicher 22 in den zweiten Speicher 23. Der zweite Speicher fungiert als ein Bildspeicher, indem der Prozessor periodisch den Datenfluß in den zweiten Speicher 23 unterbricht und die in dem zweiten Speicher abgelegten Daten über die zweite Datenverbindung 24 an die Anzeige 30 weiterleitet. Ein derartiger Auslesevorgang kann z.B. für jede Zeile der Anzeige 30 erfolgen. Ihre Häufigkeit hängt z.B. von der Art der Anzeige und von weiteren anzeigenspezifischen Daten, wie z.B. der Bildwiederholfrequenz ab. Die über die zweite Datenverbindung 24 übermittelten Bilddaten liegen dabei vorzugsweise in Form genormter Daten, wie NTSC oder PAL vor. Die Anzeige verfügt dabei über Mittel, diese genormten Daten in eine Bildinformation umzuwandeln und diese darzustellen. Die Anzeige 30 ist z.B. als ein CRT (Cathode Ray Tube) oder ein Flüssigkristalldisplay ausgestaltet.

Der erste Speicher 22 ist vorzugsweise ein nichtflüchtiger Speicher. Bevorzugt ist die Ausführung als ein Halbleiterbaustein z.B. ein EPROM (Electronic Programmable Read Only Memory) bzw. als ein Flash-EPROM, bei dem eine elektronische Rücksetzung des Speicherinhaltes möglich ist. Weiterhin ist die Ausführung als ein magnetisches Speichermedium z.B. als eine Festplatte oder Diskette, als ein optisches Speichermedium, z.B. eine CD oder eine DVD in einem entsprechenden Laufwerk, oder ein magnetooptisches Speichermedium in einem entsprechenden Laufwerk möglich. Der zweite Speicher 23 ist als ein flüchtigter Speicher ausgeführt, für den übliche, schnelle Speicherelemente auszuwählen sind. Der Prozessor 21 ist ein Mikroprozessor, ein digitaler Signalprozessor oder in einem bevorzugten Ausführungsbeispiel ein Mikrokontroller, bei dem z.B. die Prozessorperipherie mit einem Mikroprozessor vorzugsweise in einem einzigen Halbleiterbauelement integriert ist. In einem bevorzugten Ausführungsbeispiel ist die gesamte Steuervorrichtung, die den Prozessor 21, den ersten Speicher 22 und den zweiten Speicher 23 einschließlich in der Figur nicht dargestellten Schnittstelleneinheiten in einem Halbleiterbauelement integriert.

In einer bevorzugten Ausgestaltung werden über die erste Datenverbindung 12 keine Bilddaten, sondern während des Betriebs der Anzeigevorrichtung ausschließlich Anweisungen übertragen, aus dem ersten Speicher 22 von der Rechnereinheit 10 bestimmte Bilddaten dem Inhalt des zweiten Speichers 23 zu überlagern und damit eine Ausgabe an die Anzeige 30 zu ermöglichen.

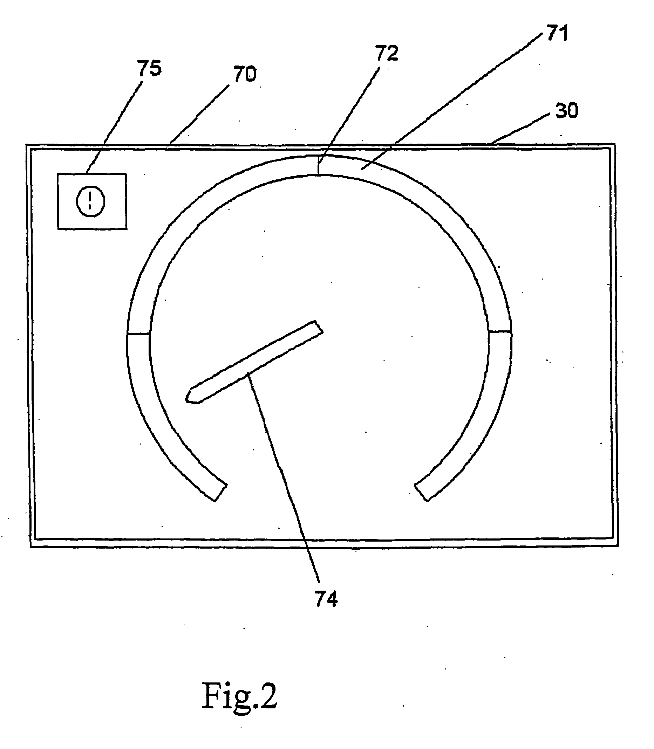

In Figur 2 ist die Darstellung eines Zeigerinstrumentes als Beispiel gewählt. In einem Sichtbereich 70 einer Anzeige 30 ist eine Skala 71 mit Maßstrichen 72 dargestellt. Die Darstellung eines Meßwertes erfolgt mit Hilfe eines Zeigers 74. Ein weiteres Symbol 75 ist dargestellt. In Abhängigkeit von über den ersten Dateneingang 11 erhaltenen Informationen gibt die Recheneinheit 10 über die erste Datenverbindung 12 an den Prozessor 21 der Steuereinrichtung 20 den Befehl, aus dem ersten Speicher 22 die Skala 71 mit Maßstrichen 72 in den zweiten Speicher 23 zu kopieren. In Abhängigkeit von über den Dateneingang 11 erhaltenen Meßgrößen werden außerdem Bilddaten aus dem ersten Speicher 22 ausgewählt, die einen Zeiger darstellen, dessen Stellung bezüglich der Skala 71 den über den Dateneingang 11 erhaltenen Meßwert repräsentiert. Bilddaten dieses Zeigers werden ebenfalls von dem Prozessor 21 aus dem ersten Speicher 22 in den zweiten Speicher 23 kopiert. Von dort werden die Bilddaten wie oben erläutert über die zweite Datenverbindung 24 an die Anzeige 30 weitergeleitet und das in Figur 2 gezeigte Zeigerinstrument wird im Sichtbereich 70 der Anzeige 30 dargestellt. Weiterhin ist es möglich, in Abhängigkeit von über den Dateneingang 11 erhaltenen Informationen auf dem zuvor beschriebenen Weg Bilddaten, die einem weiteren Symbol 75 entsprechen, aus dem ersten Speicher 22 abzurufen und ebenfalls in dem Sichtbereich 70 darzustellen. Ein Gesamtbild ist somit aus Teilbildern der Skala 71, dem Zeiger 74 und einem beispielhaft angeführten weiteren Symbol 75 möglich. Eine Berechnung dieser einzelnen Bilddaten ist nicht mehr erforderlich, da sie bereits in dem ersten Speicher 22 vorliegen.

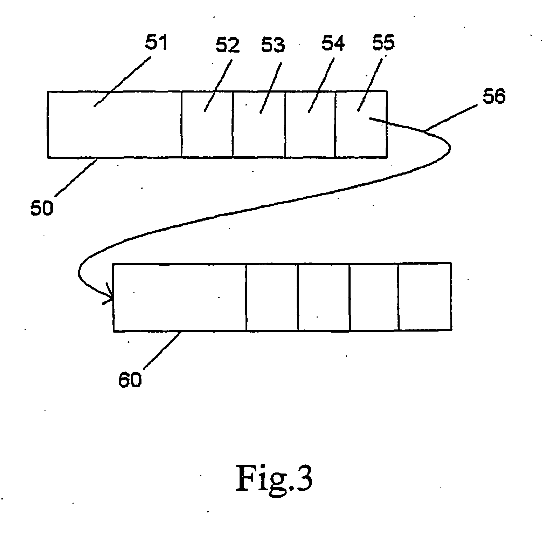

In Figur 3 sind zwei Datenpakete der in dem ersten Speicher 22 abgelegten Daten dargestellt. Ein erstes Datenpaket 50 verfügt über eine erste Einheit 51, in der eine Bildinformation gespeichert ist, eine zweite Einheit 52, in der eine Information über die Bildhöhe gespeichert ist, eine dritte Einheit 53, in der eine Information über die Bildbreite gespeichert ist, eine vierte Einheit 54, in der weitere Informationen gespeichert sind, und eine fünfte Einheit 55, die einen Verweis 56 auf ein zweites. Datenpaket 60 beinhaltet. Die Bildinformation der ersten Einheit 51 stellt dabei vorzugsweise ein Teilbild dar. Die zweite Einheit 52 und die dritte Einheit 53 geben die Bildbreite und Bildhöhe vor, d.h. in welcher Größe die Bildinformation in der Anzeige dargestellt werden soll. In der vierten Einheit 54 können Informationen über eine Priorität der Bildinformation abgelegt sein, d.h. daß eine Information mit höherer Priorität, z.B. ein Warnsignal, einer darzustellenden Information mit geringerer Priorität überlagert werden kann. Ferner ist es auch möglich, in der vierten Einheit die Position des Teilbildes in einem Gesamtbild in einer Anzeige zu speichern. Die fünfte Einheit 55 enthält den Verweis 56 auf ein nächstes Datenpaket 60, was insbesondere bei Animationssequenzen, also bei Bildern, die so schnell aufeinanderfolgen, daß bei einem Betrachter der Eindruck einer Bewegung entsteht, den Zugriff auf dieses nächste Datenpaket erleichtert und damit eine schnelle Darstellung ermöglicht. Eine Verkettung einer Vielzahl von Bildern ist durch eine Folge von Verweisen möglich. Bewegt sich z.B. in Figur 2 der Zeiger 74 im Uhrzeigersinn, so kann das zu dem Zeiger 74 gehörende Datenpaket einen Verweis auf das Datenpaket enthalten, das die Bildinformation zu dem abgespeicherten Zeiger enthält, dessen Stellung im Uhrzeigersinn dem Zeiger 74 folgt. Dieses Datenpaket kann wiederum einen Verweis auf das im Uhrzeigersinn folgende Datenpaket haben usw.
Nicht eingezeichnet ist in Figur 3 eine Teilung der fünften Einheit 55, durch die ein Verweis auf verschiedene Datenpakete in Abhängigkeit von einer anzuzeigenden Größe möglich ist. So könnte z.B. ein Verweis auf ein Datenpaket für eine Drehung im Uhrzeigersinn und ein Verweis auf ein anderes Datenpaket im Falle der Drehung gegen den Uhrzeigersinn vorliegen.

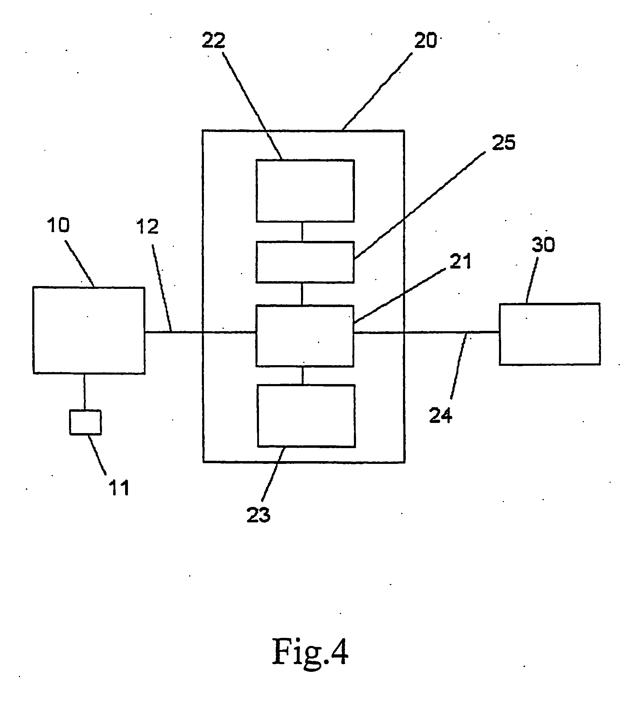

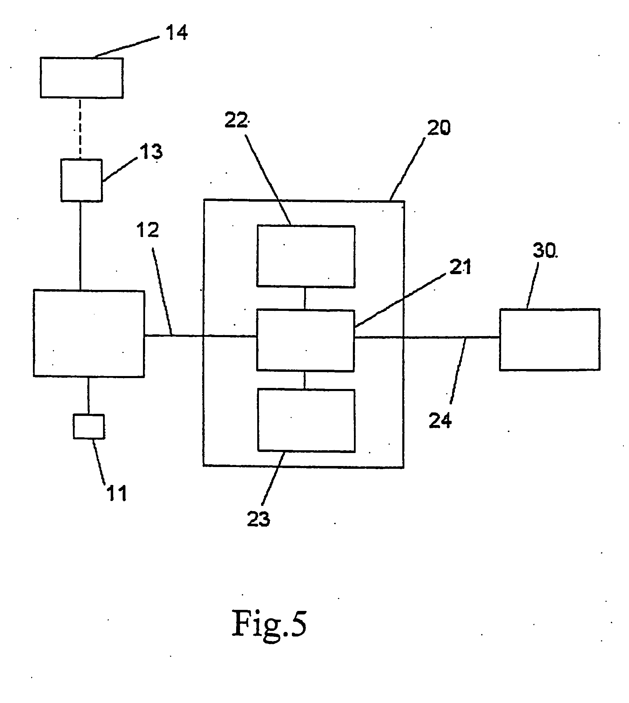

In Figur 4 ist eine weitere erfindungsgemäße Ausgestaltung der Anzeigevorrichtung dargestellt. Gegenüber der Figur 1 sind gleiche Komponenten hier und in der folgenden Figur 5 mit gleichen Bezugszeichen versehen. Gegenüber der Figur 1 ist die Anzeigevorrichtung um eine Dekomprimiereinheit 25 erweitert. Gegenüber der Figur 1 sind gleiche Komponenten mit gleichen Bezugszeichen versehen. In dem ersten Speicher 22 sind die Bildinformationen nun in komprimierter Form abgelegt, insbesondere um Speicherplatz zu sparen bzw. um die Anzahl der in dem ersten Speicher bereits vorprozessierten Bilder in Datenform zu erhöhen. Werden nun gespeicherte Daten von dem Prozessor 21 abgerufen, so erfolgt der Abruf über die Dekomprimiereinheit 25, die die gewünschten Daten aus dem ersten Speicher 22 dekomprimiert, so daß die dekomprimierten Daten in den zweiten Speicher 23 kopiert und von dort über die zweite Datenverbindung 24 an die Anzeige 30 übermittelt und dort angezeigt werden können.

In Figur 5 ist ein weiteres erfindungsgemäßes Ausführungsbeispiel dargestellt. Die Recheneinheit 10 ist hier über eine Schnittstelle 13, z.B. eine parallele Schnittstelle, mit einem Programmiergerät 14 verbunden. In einem nicht gezeichneten Ausführungsbeispiel kann die Schnittstelle 13 anstelle mit der Recheneinheit 10 direkt mit der Steuervorrichtung 20 verbunden sein. Das Programmiergerät 14 steht mit der Schnittstelle 13 in einer drahtgebundenen Verbindung oder in einer Funkverbindung. Auch eine Verbindung zu einem Datennetz, z.B. dem Internet, ist möglich. Über das Programmiergerät 14 und die Schnittstelle 13 ist es möglich, die in dem ersten Speicher 22 abgelegten Bilder in Datenform zu ändern, wobei der Speicher vorzugsweise nicht flüchtig ist. Z.B. kann eine neue Software-Version mit neuen Anzeigeelementen diese Änderung erforderlich machen. Auch ist es möglich, daß ein Benutzer der Anzeigevorrichtung das Erscheinungsbild ändern möchte, z.B. die Farbe der Skalen bzw. der Zeiger bei einem Kombiinstrument. Insbesondere ist mit dem Programmiergerät 14 auch ein erstes Einrichten des ersten Speichers 22 vor Inbetriebnahme der Anzeigevorrichtung möglich.

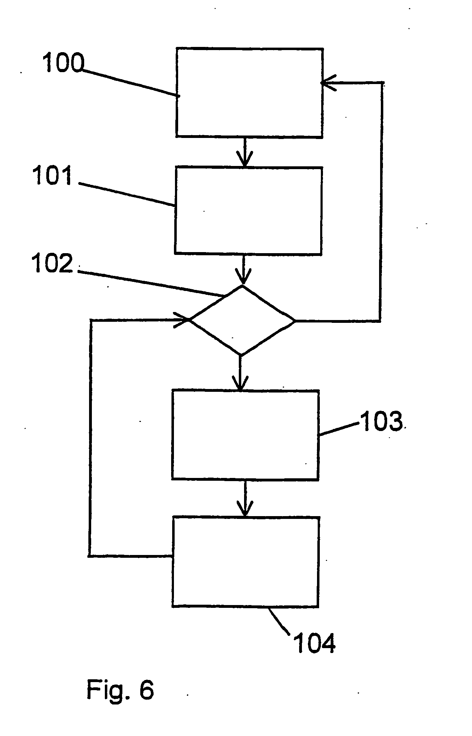

In der Figur 6 ist ein erfindungsgemäßes Verfahren zur Anzeige von Bildern dargestellt. In einem Anweisungsschritt 100 werden dem in der Steuervorrichtung 20 angeordneten Prozessor 21 über die erste Datenverbindung 12 von der Recheneinheit 10 Anweisungen übertragen, Bilddaten an die Anzeige 30 zu übermitteln, damit die Anzeige 30 diese Bilddtaen darstellen kann. Die an den Prozessor 21 übermittelten Anweisungen sind in einem bevorzugten Ausführungsbeispiel darauf beschränkt, welches Bild ausgegeben werden soll. Bilddaten werden hierbei über die erste Datenverbindung 12 nicht übertragen. In einem anschließenden, zweiten Verfahrensschritt, einem Auswahlschritt 101, wählt der Prozessor 21 in Abhängigkeit von den übermittelten Anweisungen in dem ersten Speicher 22 abgelegte Bilddaten aus, die zur Anzeige gelangen sollen. In einem anschließenden Prüfschritt 102 wird geprüft, ob bereits alle Bilddaten übertragen sind. Falls dies noch nicht erfolgt ist, wird zu einem ersten Übertragungsschritt 103 weiterverzweigt. In dem ersten Übertragungsschritt 103 werden Bilddaten von dem ersten Speicher 22 in den zweiten Speicher 23 übertragen, der ein Bildspeicher für die Anzeige 30 ist. Sind die Daten in dem ersten Speicher 22 komprimiert abgelegt, so werden in dem ersten Übertragungsschritt 103 die im ersten Speicher 22 abgelegten, komprimierten Daten von dem Decoder 25 dekomprimiert, so daß sie in unkomprimierter Form in dem zweiten Speicher 23 abgelegt werden. Die Übertragung von dem ersten Speicher 22 in den zweiten Speicher 23 wird nach einer vorgegebenen Zeitspanne unterbrochen, und es wird zu einem zweiten Übertragungsschritt 104 weiterverzweigt. In dem zweiten Übertragungsschritt 104 werden Daten aus dem zweiten Speicher zu der Anzeige 30 übertragen. Vorzugsweise werden die Daten einzelner Pixel von dem zweiten Speicher 23 an die Anzeige 30 übertragen. In einem bevorzugten Ausführungsbeispiel werden die Daten der Pixel in einem Zeilenspeicher zwischengespeichert. Nachedem eine vorgegebene Menge von Daten, also ein Datenpaket einer vorgegebenen Größe, übertragen wurde, wird zu dem Prüfschritt 102 zurückverzweigt, in dem geprüft wird, ob die gesamten Bilddaten übertragen worden sind. Ist dies nicht der Fall, so wird erneut zu dem ersten Übertragungsschritt 103 verzweigt. Der erste Übertragungsschritt 103 und der zweite Übertragungsschritt 104 werden in einem bevorzugten Ausführungsbeispiel mit einer Frequenz durchlaufen, die in einem Bereich zwischen 1 MHz und 8 MHz liegt. Wird in dem Prüfschritt 102 festgestellt, daß das gesamte Bild übertragen ist, so wird zu dem Anweisungsschritt 100 zurückverzweigt.

## Patentansprüche

1. Anzeigevorrichtung mit einer Recheneinheit (10), wobei die Recheneinheit (10) einen Dateneingang (11) aufweist, über den der Recheneinheit (10) Informationen zur Verfügung gestellt werden, mit einer Anzeige (30) zur Darstellung einer Vielzahl von Bildern und mit einer Steuervorrichtung (20) zur Steuerung der Ausgabe der Bilder über die Anzeige (30), wobei die Steuervorrichtung (20) einen flüchtigen Speicher (23) aufweist und wobei die Steuervorrichtung (30) einen nichtflüchtigen Speicher (22) aufweist, wobei in dem nichtflüchtigen Speicher (22) eine Vielzahl darzustellender, vorberechneter Bilder in Datenform abgelegt ist, und mit einem Prozessor (21), der der Steuervorrichtung (20) zugeordnet ist, wobei die Recheneinheit (10) aus dem über den Dateneingang (11) erhaltenen Informationen Anweisungen errechnet, die an den Prozessor (21) weitergegeben werden, wobei der Prozessor (21) Bilddaten von durch die Recheneinheit (10) bestimmten Bildern in Abhängigkeit von diesen Anweisungen aus dem nichtflüchtigen Speicher (22) in den flüchtigen Speicher (23) zur Darstellung in der Anzeige (30) kopiert, wobei die Anzeige (30) in einem Fahrzeug als ein Kombiinstrument, als eine Anzeige in der Mittelkonsole oder als eine Anzeige im Fond des Fahrzeugs eingesetzt ist.

2. Anzeigevorrichtung nach Anspruch 1, **dadurch gekennzeichnet, dass** in dem nichtflüchtigen Speicher (22) die abgelegten Bilder veränderbar sind.

3. Anzeigevorrichtung nach Anspruch 2, **dadurch gekennzeichnet, dass** die veränderbaren Bilder der Anzeigevorrichtung über eine Schnittstelle (13) zuführbar sind.

4. Anzeigevorrichtung nach einem der vorhergehenden Ansprüche, **dadurch gekennzeichnet, dass** zumindest ein Teil der Bilder komprimiert gespeichert ist und die Steuervorrichtung (20) über einen Decoder (25) für komprimiert vorliegende Bilddaten verfügt.

5. Anzeigevorrichtung nach einem der vorhergehenden Ansprüche, **dadurch gekennzeichnet, dass** die Steuervorrichtung (20) als ein Halbleiterbauelement ausgeführt ist.

6. Anzeigevorrichtung nach einem der vorhergehenden Ansprüche, **dadurch gekennzeichnet, dass** die Steuervorrichtung (20) über eine serielle Schnittstelle verfügt.

7. Anzeigevorrichtung nach einem der vorherigen Ansprüche, **dadurch gekennzeichnet, dass** die Anzeige (30) als ein frei programmierbares Kombünstrument ausgeführt ist.

8. Verfahren zur Anzeige von Messwerten in einem Fahrzeug, wobei einer Recheneinheit (10) Informationen in Form von Messwerten über einen Dateneingang (11) zur Verfügung gestellt werden, wobei die Recheneinheit (10) aus den über den Dateneingang (11) erhaltenen Informationen Anweisungen errechnet, die an einen Prozessor (21) übertragen werden, wobei der Prozessor (21) Bilddaten von durch die Recheneinheit (10) bestimmten Bildern in Abhängigkeit von diesen Anweisungen in einem nichtflüchtigen Speicher (22), in dem vorberechnete Bilder gespeichert sind, auswählt und in einen flüchtigen Speicher (23) kopiert, wobei die Daten von dem flüchtigen Speicher (23) an eine Anzeige (30) übertragen werden und das den Bilddaten zugeordnete Bild in der Anzeige (30) angezeigt wird.

9. Verfahren nach Anspruch 8, **dadurch gekennzeichnet, dass** die Häufigkeit der Übertragung der Bilddaten von dem flüchtigen Speicher (23) an die Anzeige (30) von der Bildwiederholfrequenz abhängt.

10. Verfahren nach einem der Ansprüche 8-9, **dadurch gekennzeichnet, dass** die Bilddaten in dem nichtflüchtigen Speicher (22) komprimiert gespeichert werden.

11. Verfahren nach einem der Ansprüche 8-10, **dadurch gekennzeichnet, dass** die in dem nichtflüchtigen Speicher (22) abgelegten Bilder verändert werden, indem Bilder dem nichtflüchtigen Speicher über eine Schnittstelle (13) zugeführt werden.

12. Verfahren nach einem der Ansprüche 8-11, **dadurch gekennzeichnet, dass** in dem nichtflüchtigen Speicher (22) Teilbilder abgelegt werden.

13. Verfahren nach Anspruch 12, **dadurch gekennzeichnet, dass** die in dem nichtflüchtigen Speicher (22) abgelegten Teilbilder zu unterschiedlichen Gesamtbildern in der Anzeige (30) zusammengesetzt werden.

14. Verfahren nach einem der Ansprüche 12-13, **dadurch gekennzeichnet, dass** die in dem nichtflüchtigen Speicher (22) abgelegten Teilbilder mit Informationen über ihre Breite, ihre Höhe und ihre Position in der Anzeige (30) gespeichert werden.

15. Verfahren nach einem der Ansprüche 8-14, **dadurch gekennzeichnet, dass** die in dem nichtflüchtigen Speicher (22) abgelegten Bilddaten miteinander verkettet abgelegt werden.

## Claims

1. Display apparatus having a computation unit (10), the computation unit (10) having a data input (11) which is used to provide the computation unit (10) with information, having a display (30) for representing a multiplicity of images and having a control apparatus (20) for controlling the output of the images via the display (30), the control apparatus (20) having a volatile memory (23) and the control apparatus (30) having a non-volatile memory (22), a multiplicity of precalculated images to be represented being stored in the form of data in the non-volatile memory (22), and having a processor (21) which is associated with the control apparatus (20), the computation unit (10) using the information received via the data input (11) to calculate instructions which are forwarded to the processor (21), the processor (21) copying, on the basis of these instructions, image data of images, which are determined by the computation unit (10), from the non-volatile memory (22) to the volatile memory (23) for representation on the display (30), the display (30) being used in a vehicle as a combination instrument, as a display in the centre console or as a display in the back of the vehicle.

2. Display apparatus according to Claim 1, **characterized in that** the stored images can be changed in the non-volatile memory (22).

3. Display apparatus according to Claim 2, **characterized in that** the images which can be changed can be supplied to the display apparatus via an interface (13).

4. Display apparatus according to one of the preceding claims, **characterized in that** at least some of the images are stored in compressed form and the control apparatus (20) has a decoder (25) for compressed image data.

5. Display apparatus according to one of the preceding claims, **characterized in that** the control apparatus (20) is in the form of a semiconductor component.

6. Display apparatus according to one of the preceding claims, **characterized in that** the control apparatus (20) has a serial interface.

7. Display apparatus according to one of the preceding claims, **characterized in that** the display (30) is in the form of a freely programmable combination instrument.

8. Method for displaying measured values in a vehicle, a computation unit (10) being provided with information in the form of measured values via a data input (11), the computation unit (10) using the information received via the data input (11) to calculate instructions which are transmitted to a processor (21), the processor (21) selecting, on the basis of these instructions, image data of images, which are determined by the computation unit (10), in a non-volatile memory (22) in which precalculated images are stored and copying them to a volatile memory (23), the data being transmitted from the volatile memory (23) to a display (30) and the image which is associated with the image data being displayed on the display (30).

9. Method according to Claim 8, **characterized in that** the frequency with which the image data are transmitted from the volatile memory (23) to the display (30) depends on the frame frequency.

10. Method according to one of Claims 8-9, **characterized in that** the image data are stored in compressed form in the non-volatile memory (22).

11. Method according to one of Claims 8-10, **characterized in that** the images which are stored in the non-volatile memory (22) are changed by supplying images to the non-volatile memory via an interface (13).

12. Method according to one of Claims 8-11, **characterized in that** partial images are stored in the non-volatile memory (22).

13. Method according to Claim 12, **characterized in that** the partial images which are stored in the non-volatile memory (22) are assembled to form different overall images on the display (30).

14. Method according to one of Claims 12-13, **characterized in that** the partial images which are stored in the non-volatile memory (22) are stored with information relating to their width, height and position on the display (30).

15. Method according to one of Claims 8-14, **characterized in that** the image data which are stored in the non-volatile memory (22) are stored such that they are concatenated.

## Revendications

1. Dispositif d'affichage comprenant une unité de calculs (10),
l'unité de calculs (10) ayant une entrée de données (11) par laquelle on fournit des informations à l'unité de calculs (10),
comprenant
un afficheur (30) pour représenter un ensemble d'images et un dispositif de commande (20) pour commander l'émission des images par l'afficheur (30),
le dispositif de commande (20) ayant une mémoire volatile (23) et
le dispositif de commande (30) ayant une mémoire non volatile (22),
la mémoire non volatile (22) contenant l'enregistrement d'un grand nombre d'images précalculées, en forme de données, à représenter et un processeur (21) associé au dispositif de commande (20),
l'unité de calcul (10) calculant des indications à partir des informations reçues par l'entrée de données (11), ces indications étant transmises au processeur (21),
le processeur (21) copiant des données d'images définies par l'unité de calculs (10) en fonction de ces indications, de la mémoire non volatile (22) vers la mémoire volatile (23) pour les représenter sur l'afficheur (30),
l'afficheur (30) étant intégré dans le véhicule comme instrument combiné, comme afficheur dans la console centrale ou comme afficheur à l'année du véhicule.

2. Dispositif d'affichage selon la revendication 1,
**caractérisé en ce que**
les images enregistrées dans la mémoire non volatile (22) peuvent être modifiées.

3. Dispositif d'affichage selon la revendication 2,
**caractérisé en ce que**
les images susceptibles d'être modifiées sont fournies au dispositif d'affichage par l'intermédiaire d'une interface (13).

4. Dispositif d'affichage selon l'une des revendications précédentes,
**caractérisé en ce qu'**
au moins une partie des images est enregistrée à l'état comprimé et le dispositif de commande (20) dispose d'un décodeur (25) pour les données d'images existant à l'état comprimé.

5. Dispositif d'affichage selon l'une des revendications précédentes,
**caractérisé en ce que**
le dispositif de commande (20) est un composant semi-conducteur.

6. Dispositif d'affichage selon l'une des revendications précédentes,
**caractérisé en ce que**
le dispositif de commande (20) dispose d'une interface série.

7. Dispositif d'affichage selon l'une des revendications précédentes,
**caractérisé en ce que**
l'afficheur (30) est un instrument combiné, programmable librement.

8. Procédé d'affichage de valeurs de mesure dans un véhicule selon lequel, une unité de calcul (10) reçoit des informations sous la forme de valeurs de mesures par une entrée de données (11),
l'unité de calcul (10) calculant des indications à partir des informations reçues par l'entrée de données (11), ces indications étant transmises à un processeur (21),
le processeur (21) sélectionnant des données d'images parmi les images déterminées par l'unité de calcul (10) en fonction de ces indications dans une mémoire non volatile (22) dans laquelle sont enregistrées les images précalculées et il les copie dans une mémoire volatile (23),
les données de la mémoire volatile (23) étant transmises à un afficheur (30) et l'image associée aux données de l'image est affichée sur l'afficheur (30).

9. Procédé selon la revendication 8,
**caractérisé en ce que**
la fréquence de la transmission des données d'images à partir de la mémoire volatile (23) vers l'afficheur (30) dépend de la fréquence de répétition des images.

10. Procédé selon l'une des revendications 8 ou 9,
**caractérisé en ce que**
les données d'images dont enregistrées à l'état comprimé dans la mémoire non volatile (22).

11. Procédé selon l'une des revendications 8 à 10,
**caractérisé en ce que**
les images enregistrées dans la mémoire non volatile (22) sont modifiées en ce qu'on fournit les images à la mémoire non volatile par l'intermédiaire d'une interface (13).

12. Procédé selon l'une des revendications 8 a 11,
**caractérisé en ce que**
des images partielles sont enregistrées dans la mémoire non volatile (22).

13. Procédé selon la revendication 12,
**caractérisé en ce que**
les images partielles enregistrées dans la mémoire non volatile (22) sont réunies dans l'afficheur (30) pour former différentes images globales.

14. Procédé selon l'une des revendications 12 et 13,
**caractérisé en ce que**
les images partielles dans la mémoire non volatile (22) sont enregistrées avec des informations concernant leur largeur, leur hauteur et leur position dans l'afficheur (30).

15. Procédé selon l'une des revendications 8 à 14,
**caractérisé en ce que**
les données d'images enregistrées dans la mémoire non volatile (22) sont enregistrées de façon liée.
